# EUROPEAN PATENT APPLICATION

(11) **EP 4 811 668 A1**
(43) Date of publication of application: **23.09.2026**
(21) Application number: 24902936.4
(22) Date of filing: 13.12.2024
(51) Int. Cl.: H04B 1/04

(54) **COMMUNICATION METHOD, APPARATUS AND SYSTEM, CHIP, STORAGE MEDIUM AND PROGRAM PRODUCT**

(30) Priority: 15.12.2023 CN 202311736513
(71) Applicant: Huawei Technologies Co., Ltd., Shenzhen, Guangdong 518129 (CN)
(72) Inventor: CHEN, Ying, Shenzhen, Guangdong 518129 (CN); TIE, Xiaolei, Shenzhen, Guangdong 518129 (CN)
(74) Representative: Pfenning, Meinig & Partner mbB
(86) International application number: PCT/CN2024/139028
(87) International publication number: WO 2025/124519

(57) **Abstract**

Provided are a communication method, apparatus, and system, a chip, a storage medium, and a program product. A network device indicates a power adjustment amount, so that a terminal device can obtain a new transmit power based on an initial transmit power and the power adjustment amount, and perform uplink communication at the new transmit power, thereby allowing for flexible adjustment of the transmit power of the terminal device.

## Description

This application claims priority to Chinese Patent Application No. 202311736513.4, filed with the China National Intellectual Property Administration on December 15, 2023 and entitled "COMMUNICATION METHOD, APPARATUS, AND SYSTEM, CHIP, STORAGE MEDIUM, AND PROGRAM PRODUCT", which is incorporated herein by reference in its entirety.

### TECHNICAL FIELD

This application relates to the field of communication technologies, and in particular, to a communication method, apparatus, and system, a chip, a storage medium, and a program product.

### BACKGROUND

When a terminal device communicates with a satellite, a transmit power of the terminal device is determined by a configured maximum transmit power *P_{CMAX,c}* of the terminal device. A power back-off value of the transmit power of the terminal device is determined by a parameter *P-mac* indicated by a network side via radio resource control (radio resource control, RRC) signaling. For a terminal device that does not support RRC reconfiguration, RRC signaling is configured once and is not updated when the terminal device is in a connected state. If the terminal device remains in the connected state for an extended period, the network side configures conservative *P-mac*. To be specific, a power back-off value obtained through calculation causes the terminal device to reduce its transmit power to 23 dBm. Otherwise, there is a risk of failing to meet radiation requirements. This greatly limits flexibility of power adjustment for high-power terminals.

### SUMMARY

This application provides a communication method, apparatus, and system, a chip, a storage medium, and a program product, so that a transmit power of a terminal device can be flexibly determined.

A first aspect provides a communication method. The method is implemented by a terminal device, or a chip or circuit used in a terminal device.

The method includes: obtaining a first transmit power; receiving first information, where the first information indicates a first power adjustment amount; and performing uplink communication at a second transmit power, where the second transmit power is obtained based on the first transmit power and the first information.

In this aspect, the terminal device receives a power adjustment amount indicated by a network device, so that the terminal device can obtain a new transmit power based on an initial transmit power and the power adjustment amount, and perform uplink communication at the new transmit power, thereby allowing for flexible adjustment of the transmit power of the terminal device. The new transmit power may be higher than 23 dBm, so that the terminal device can transmit at high power.

In a possible implementation, the first transmit power is based on a maximum transmit power configured by the network device.

In this implementation, the network device may configure the maximum transmit power based on a capability of the terminal device, and the terminal device determines the actual first transmit power based on the maximum transmit power.

In another possible implementation, the first transmit power is a maximum transmit power, a minimum transmit power, or an intermediate value of transmit power of the terminal device, where the intermediate value of transmit power is an intermediate value between the maximum transmit power and the minimum transmit power.

In this implementation, the network device may not configure a maximum transmit power, or the terminal device does not adopt a maximum transmit power configured by the network device, and the terminal device obtains the maximum transmit power, the minimum transmit power, or the intermediate value of transmit power of the terminal device as the actual first transmit power.

In still another possible implementation, the first information further indicates an effective period of the first power adjustment amount.

For example, the effective period includes at least one of the following information: start effective time, effective duration, or end effective time.

In this implementation, to meet human radiation exposure requirements, the network device may further indicate the effective period of the first power adjustment amount by using the first information, to prevent the terminal device from continuously transmitting at high power.

In still another possible implementation, the first information further indicates effective duration of the first power adjustment amount.

In still another possible implementation, the first information includes effective duration of the first power adjustment amount, or includes an offset of effective duration of the first power adjustment amount.

In still another possible implementation, the method further includes: receiving second information, where the second information indicates the effective duration of the first power adjustment amount.

In still another possible implementation, the second information includes the effective duration of the first power adjustment amount, or includes a base value of the effective duration of the first power adjustment amount.

In this implementation, the effective duration of the first power adjustment amount or the base value of the effective duration of the first power adjustment amount may be indicated by using the second information. When the second information indicates the base value of the effective duration of the first power adjustment amount, the effective duration of the first power adjustment amount is equal to a sum of the base value and the offset of the effective duration indicated by the first information.

In still another possible implementation, the first power adjustment amount takes effect after first time following reception of the first information; or the first power adjustment amount takes effect after second time following sending of third information; or the first power adjustment amount takes effect when the third information is sent; or the first power adjustment amount takes effect when the first transmit power becomes invalid, where the third information indicates whether the first information is successfully received.

In this implementation, because the terminal device needs to perform parsing after receiving the first information, the start effective time of the first power adjustment amount is specified to accurately perform power adjustment. If the first transmit power is also determined based on an indication of the network device, the first power adjustment amount may take effect when the first transmit power becomes invalid.

In still another possible implementation, the start effective time of the first power adjustment amount is a start moment of a first uplink subframe, and the first uplink subframe is any one of the following: a first uplink subframe after the first time following reception of the first information; or a first uplink subframe after the second time following sending of the third information; or a first uplink subframe following sending of the third information; or a first uplink subframe after end effective time of the first transmit power.

In this implementation, to accurately perform power adjustment, the start effective time of the first power adjustment amount is specified as the start moment of the first uplink subframe.

In still another possible implementation, the method further includes: sending fourth information, where the fourth information indicates whether transmission in a first power mode is supported.

In this implementation, after the terminal device is scheduled to transmit at high power for a period of time, the terminal device may count duration of the high-power transmission, and send the fourth information to indicate whether transmission in the first power mode is supported. The first power mode is a high-power transmission mode.

In still another possible implementation, the fourth information is carried in at least one of the following information: a buffer status report, hybrid automatic repeat request (hybrid automatic repeat request, HARQ) feedback information, or a random access request.

In this implementation, whether transmission in the first power mode is supported may be indicated by using the fourth information in an explicit or implicit manner.

In still another possible implementation, a first scrambling scheme is used for the buffer status report, to indicate whether transmission in the first power mode is supported.

In this implementation, whether transmission in the first power mode is supported is indicated in an implicit manner, so that indication overheads can be reduced.

In still another possible implementation, a first scrambling scheme is used for the hybrid automatic repeat request feedback information, to indicate whether transmission in the first power mode is supported.

In this implementation, whether transmission in the first power mode is supported is indicated in an implicit manner, so that indication overheads can be reduced.

In still another possible implementation, the fourth information is a first random access preamble sequence, to indicate whether transmission in the first power mode is supported.

In this implementation, whether transmission in the first power mode is supported is indicated in an implicit manner, so that indication overheads can be reduced.

In still another possible implementation, the first power adjustment amount is a positive value or a negative value.

In still another possible implementation, the first information includes an index corresponding to the first power adjustment amount, or the first information includes a power level corresponding to the second transmit power.

In still another possible implementation, the first information is any one of the following: a medium access control control element (medium access control control element, MAC CE) or downlink control information (downlink control information, DCI).

A second aspect provides a communication method. The method is implemented by a network device, or a chip or circuit used in a network device.

The method includes: sending first information, where the first information indicates a first power adjustment amount; and receiving an uplink signal from a terminal device, where the uplink signal is sent by the terminal device at a second transmit power, and the second transmit power is obtained based on a first transmit power and the first information.

For example, the first transmit power is a transmit power determined before the terminal device receives the first information.

In this aspect, the network device indicates a power adjustment amount, so that the terminal device can obtain a new transmit power based on an initial transmit power and the power adjustment amount, and perform uplink communication at the new transmit power, thereby allowing for flexible adjustment of the transmit power of the terminal device. The new transmit power may be higher than 23 dBm, so that the terminal device can transmit at high power.

In a possible implementation, the first transmit power is based on a maximum transmit power configured by the network device.

In this implementation, the network device may configure the maximum transmit power based on a capability of the terminal device, and the terminal device determines the actual first transmit power based on the maximum transmit power.

In another possible implementation, the first transmit power is a maximum transmit power, a minimum transmit power, or an intermediate value of transmit power of the terminal device, where the intermediate value of transmit power is an intermediate value between the maximum transmit power and the minimum transmit power.

In this implementation, the network device may not configure a maximum transmit power, or the terminal device does not adopt a maximum transmit power configured by the network device, and the terminal device obtains the maximum transmit power, the minimum transmit power, or the intermediate value of transmit power of the terminal device as the actual first transmit power.

In still another possible implementation, the first information further indicates an effective period of the first power adjustment amount.

For example, the effective period includes at least one of the following information: start effective time, effective duration, or end effective time.

In this implementation, to meet human radiation exposure requirements, the network device may further indicate the effective period of the first power adjustment amount by using the first information, to prevent the terminal device from continuously transmitting at high power.

In still another possible implementation, the first information further indicates effective duration of the first power adjustment amount.

In still another possible implementation, the first information includes effective duration of the first power adjustment amount, or includes an offset of effective duration of the first power adjustment amount.

In still another possible implementation, the method further includes: sending second information, where the second information indicates the effective duration of the first power adjustment amount.

In still another possible implementation, the second information includes the effective duration of the first power adjustment amount, or includes a base value of the effective duration of the first power adjustment amount.

In this implementation, the effective duration of the first power adjustment amount or the base value of the effective duration of the first power adjustment amount may be indicated by using the second information. When the second information indicates the base value of the effective duration of the first power adjustment amount, the effective duration of the first power adjustment amount is equal to a sum of the base value and the offset of the effective duration indicated by the first information.

In still another possible implementation, the first power adjustment amount takes effect after first time following reception of the first information by the terminal device; or the first power adjustment amount takes effect after second time following sending of third information by the terminal device; or the first power adjustment amount takes effect when the terminal device sends the third information; or the first power adjustment amount takes effect when the first transmit power becomes invalid, where the third information indicates whether the first information is successfully received.

In this implementation, because the terminal device needs to perform parsing after receiving the first information, the start effective time of the first power adjustment amount is specified to accurately perform power adjustment. If the first transmit power is also determined based on an indication of the network device, the first power adjustment amount may take effect when the first transmit power becomes invalid.

In still another possible implementation, the start effective time of the first power adjustment amount is a start moment of a first uplink subframe, and the first uplink subframe is any one of the following: a first uplink subframe after the first time following reception of the first information by the terminal device; or a first uplink subframe after the second time following sending of the third information by the terminal device; or a first uplink subframe following sending of the third information by the terminal device; or a first uplink subframe after end effective time of the first transmit power.

In this implementation, to accurately perform power adjustment, the start effective time of the first power adjustment amount is specified as the start moment of the first uplink subframe.

In still another possible implementation, the method further includes: receiving fourth information, where the fourth information indicates whether transmission in a first power mode is supported.

In this implementation, after the terminal device is scheduled to transmit at high power for a period of time, the terminal device may count duration of the high-power transmission, and send the fourth information to indicate whether transmission in the first power mode is supported. The first power mode is a high-power transmission mode.

In still another possible implementation, the fourth information is carried in at least one of the following information: a buffer status report, hybrid automatic repeat request feedback information, or a random access request.

In this implementation, whether transmission in the first power mode is supported may be indicated by using the fourth information in an explicit or implicit manner.

In still another possible implementation, a first scrambling scheme is used for the buffer status report, to indicate whether transmission in the first power mode is supported.

In this implementation, whether transmission in the first power mode is supported is indicated in an implicit manner, so that indication overheads can be reduced.

In still another possible implementation, a first scrambling scheme is used for the hybrid automatic repeat request feedback information, to indicate whether transmission in the first power mode is supported.

In this implementation, whether transmission in the first power mode is supported is indicated in an implicit manner, so that indication overheads can be reduced.

In still another possible implementation, the fourth information is a first random access preamble sequence, to indicate whether transmission in the first power mode is supported.

In this implementation, whether transmission in the first power mode is supported is indicated in an implicit manner, so that indication overheads can be reduced.

In still another possible implementation, the first power adjustment amount is a positive value or a negative value.

In still another possible implementation, the first information includes an index corresponding to the first power adjustment amount, or the first information includes a power level corresponding to the second transmit power.

In still another possible implementation, the first information is any one of the following: a MAC CE or DCI.

A third aspect provides a communication apparatus configured to implement the communication method in the first aspect or any one of the implementations of the first aspect. The apparatus may be a terminal device, or may be a module (such as a processor, a chip, or a chip system) used in a terminal device, or may be a logical node, a logical module, or software that can implement all or a part of a terminal device. In an implementation, the communication apparatus may include a sending unit and a receiving unit, and may further include a processing unit. The sending unit and the receiving unit may be independent of each other, or may be combined together (which may be referred to as a "transceiver unit").

A fourth aspect provides a communication apparatus configured to implement the communication method in the second aspect or any one of the implementations of the second aspect. The apparatus may be a network device, or may be a module (such as a processor, a chip, or a chip system) used in a network device, or may be a logical node, a logical module, or software that can implement all or some functions of a network device. In an implementation, the communication apparatus may include a sending unit and a receiving unit, and may further include a processing unit. The sending unit and the receiving unit may be independent of each other, or may be combined together (which may be referred to as a "transceiver unit").

In a possible implementation, the communication apparatus in the third aspect and the fourth aspect includes a module configured to perform the method according to any one of the first aspect and the second aspect or any one of the implementations in the first aspect and the second aspect.

When the communication apparatus is configured to implement the method according to the first aspect or any one of the implementations of the first aspect, the processing unit is configured to obtain a first transmit power; the transceiver unit is configured to receive first information, where the first information indicates a first power adjustment amount; and the transceiver unit is further configured to perform uplink communication at a second transmit power, where the second transmit power is obtained based on the first transmit power and the first information.

Optionally, the first transmit power is based on a maximum transmit power configured by the network device.

Optionally, the first transmit power is a maximum transmit power, a minimum transmit power, or an intermediate value of transmit power of the terminal device, where the intermediate value of transmit power is an intermediate value between the maximum transmit power and the minimum transmit power.

Optionally, the first information further indicates an effective period of the first power adjustment amount.

For example, the effective period includes at least one of the following information: start effective time, effective duration, or end effective time.

Optionally, the first information further indicates effective duration of the first power adjustment amount.

Optionally, the first information includes effective duration of the first power adjustment amount, or includes an offset of effective duration of the first power adjustment amount.

Optionally, the transceiver unit is further configured to receive second information, where the second information indicates the effective duration of the first power adjustment amount.

Optionally, the second information includes the effective duration of the first power adjustment amount, or includes a base value of the effective duration of the first power adjustment amount.

Optionally, the first power adjustment amount takes effect after first time following reception of the first information; or the first power adjustment amount takes effect after second time following sending of third information; or the first power adjustment amount takes effect when the third information is sent; or the first power adjustment amount takes effect when the first transmit power becomes invalid, where the third information indicates whether the first information is successfully received.

Optionally, the start effective time of the first power adjustment amount is a start moment of a first uplink subframe, and the first uplink subframe is any one of the following: a first uplink subframe after the first time following reception of the first information; or a first uplink subframe after the second time following sending of the third information; or a first uplink subframe following sending of the third information; or a first uplink subframe after end effective time of the first transmit power.

Optionally, the transceiver unit is further configured to send fourth information, where the fourth information indicates whether transmission in a first power mode is supported.

Optionally, the fourth information is carried in at least one of the following information: a buffer status report, HARQ feedback information, or a random access request.

When the communication apparatus is configured to implement the method according to the second aspect or any one of the implementations of the second aspect, the transceiver unit is configured to send first information, where the first information indicates a first power adjustment amount; and receive an uplink signal from a terminal device, where the uplink signal is sent by the terminal device at a second transmit power, and the second transmit power is obtained based on a first transmit power and the first information.

For example, the first transmit power is a transmit power determined before the terminal device receives the first information.

Optionally, the first transmit power is based on a maximum transmit power configured by the network device.

Optionally, the first transmit power is a maximum transmit power, a minimum transmit power, or an intermediate value of transmit power of the terminal device, where the intermediate value of transmit power is an intermediate value between the maximum transmit power and the minimum transmit power.

Optionally, the first information further indicates an effective period of the first power adjustment amount.

For example, the effective period includes at least one of the following information: start effective time, effective duration, or end effective time.

Optionally, the first information further indicates effective duration of the first power adjustment amount.

Optionally, the first information includes effective duration of the first power adjustment amount, or includes an offset of effective duration of the first power adjustment amount.

Optionally, the transceiver unit is further configured to send second information, where the second information indicates the effective duration of the first power adjustment amount.

Optionally, the second information includes the effective duration of the first power adjustment amount, or includes a base value of the effective duration of the first power adjustment amount.

Optionally, the first power adjustment amount takes effect after first time following reception of the first information; or the first power adjustment amount takes effect after second time following sending of third information; or the first power adjustment amount takes effect when the third information is sent; or the first power adjustment amount takes effect when the first transmit power becomes invalid, where the third information indicates whether the first information is successfully received.

Optionally, the start effective time of the first power adjustment amount is a start moment of a first uplink subframe, and the first uplink subframe is any one of the following: a first uplink subframe after the first time following reception of the first information; or a first uplink subframe after the second time following sending of the third information; or a first uplink subframe following sending of the third information; or a first uplink subframe after end effective time of the first transmit power.

Optionally, the transceiver unit is further configured to receive fourth information, where the fourth information indicates whether transmission in a first power mode is supported.

Optionally, the fourth information is carried in at least one of the following information: a buffer status report, HARQ feedback information, or a random access request.

When the communication apparatus is configured to implement the method according to the second aspect or any one of the implementations of the second aspect:
In another possible implementation, the communication apparatus in the third aspect and the fourth aspect includes a processor coupled to a memory. The processor is configured to enable the apparatus to perform corresponding functions in the foregoing communication method. The memory is configured to be coupled to the processor, and stores a program (instructions) and/or data necessary for the apparatus. Optionally, the communication apparatus may further include a communication interface configured to implement communication between the apparatus and another network element. Optionally, the memory may be located inside the communication apparatus, or may be located outside the communication apparatus.

In still another possible implementation, the communication apparatus in the third aspect and the fourth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or executing code instructions. The transceiver apparatus may be a transceiver, a transceiver circuit, or an input/output interface, and is configured to receive a signal from a communication apparatus other than the communication apparatus and transmit the signal to the processor, or transmit a signal from the processor to a communication apparatus other than the communication apparatus. When the communication apparatus is a chip, the transceiver apparatus is a transceiver circuit or an input/output interface.

When the communication apparatus in the third aspect and the fourth aspect is a chip, the sending unit may be an output unit, such as an output circuit or a communication interface, and the receiving unit may be an input unit, such as an input circuit or a communication interface. When the communication apparatus is a terminal, the sending unit may be a transmitter or a transmitting machine, and the receiving unit may be a receiver or a receiving machine.

A fifth aspect provides a computer-readable storage medium. The computer-readable storage medium stores a computer program or instructions. When the computer program or the instructions are executed, the method according to the foregoing aspect is implemented.

A sixth aspect provides a computer program product including instructions. When the instructions are run on a communication apparatus, the communication apparatus is enabled to perform the method according to the foregoing aspect.

A seventh aspect provides a communication system. The communication system includes the communication apparatus according to the third aspect and the communication apparatus according to the fourth aspect.

### BRIEF DESCRIPTION OF DRAWINGS

FIG. 1 is a simplified diagram of a wireless communication system according to an embodiment of this application;
FIG. 2a to FIG. 2c are diagrams of application scenarios of a satellite-terrestrial integrated network;
FIG. 3 is a schematic flowchart of a communication method according to an embodiment of this application;
FIG. 4 is a schematic flowchart of another communication method according to an embodiment of this application;
FIG. 5 is a diagram of a structure of a communication apparatus according to an embodiment of this application; and
FIG. 6 is a diagram of a structure of another communication apparatus according to an embodiment of this application.

### DESCRIPTION OF EMBODIMENTS

The following describes embodiments of this application with reference to the accompanying drawings in embodiments of this application.

The technologies provided in this application are applicable to various communication systems. For example, the communication system may be a 4th generation (4th generation, 4G) communication system (for example, a long term evolution (long term evolution, LTE) system), a 5th generation (5th generation, 5G) communication system, worldwide interoperability for microwave access (worldwide interoperability for microwave access, WiMAX), a wireless local area network (wireless local area network, WLAN) system, a converged system of a plurality of systems, or a future communication system. The 5G communication system may also be referred to as a new radio (new radio, NR) system.

A network element in the communication system may send a signal to another network element or receive a signal from another network element. The signal may include information, signaling, data, or the like. The network element may be replaced with an entity, a network entity, a device, a terminal device, a communication module, a node, a communication node, or the like. In this application, the network element is used as an example for description. For example, the communication system may include at least one terminal device and at least one access network device. The access network device may send a downlink signal to the terminal device, and/or the terminal device may send an uplink signal to the access network device. In addition, it may be understood that, if the communication system includes a plurality of terminal devices, the plurality of terminal devices may also send signals to each other, that is, both a signal sending network element and a signal receiving network element may be terminal devices.

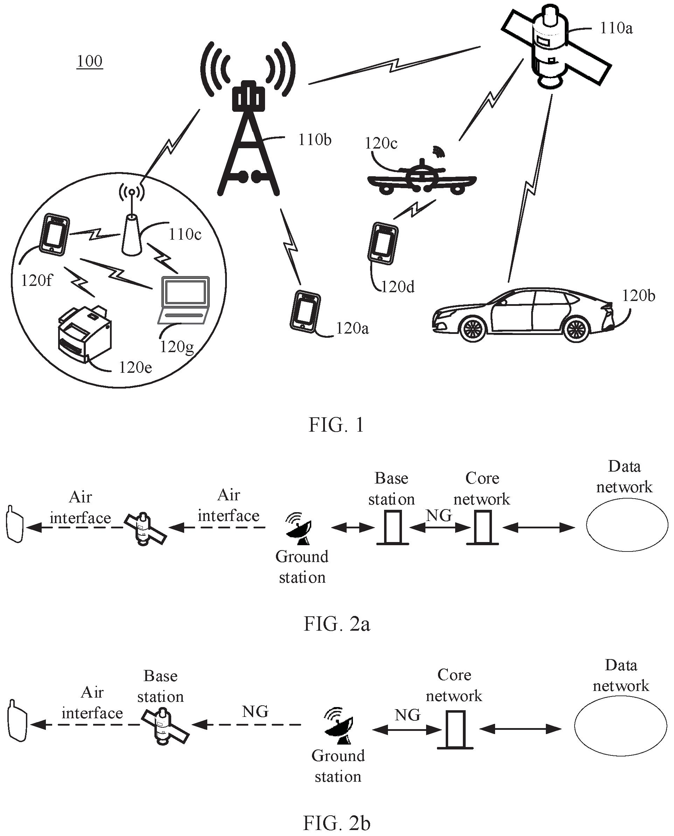

The communication method provided in embodiments of this application may be applied to a wireless communication system such as 5G, a future communication network, or satellite communication. FIG. 1 is a simplified diagram of a wireless communication system according to an embodiment of this application. As shown in FIG. 1, the wireless communication system includes a radio access network (radio access network, RAN) 100. The radio access network 100 may be a radio access network of a future communication network, or a conventional (for example, 5G or 4G) radio access network. One or more terminal devices (120a to 120g, which are collectively referred to as 120) may be connected to each other, or may be connected to one or more network devices (110a to 110c, which are collectively referred to as 110) in the radio access network 100. A connection manner may be wired or wireless. Optionally, FIG. 1 is merely a diagram. The wireless communication system may further include another device, for example, may further include a core network device, a wireless relay device, and/or a wireless backhaul device, which are not shown in FIG. 1.

Optionally, during actual application, the wireless communication system may include a plurality of network devices (also referred to as access network devices) and may also include a plurality of terminal devices. One network device may serve one or more terminal devices. One terminal device may also access one or more network devices. Quantities of terminal devices and network devices that are included in the wireless communication system are not limited in embodiments of this application.

The network device may be an entity configured to transmit or receive a signal on a network side. The network device may be an access device via which the terminal device accesses the wireless communication system in a wireless manner. For example, the network device may be a base station. The base station may cover the following various names in a broad sense, or may be replaced with the following names: a RAN node, a NodeB (NodeB), an evolved NodeB (evolved NodeB, eNB), a next generation NodeB (next generation NodeB, gNB), a satellite base station, an access network device in an open radio access network (open radio access network, O-RAN), a relay station, an access point, a transmitting and receiving point (transmitting and receiving point, TRP), a transmitting point (transmitting point, TP), a master eNodeB (master eNB, MeNB), a secondary eNodeB (secondary eNB, SeNB), a multi-standard radio (multi-standard radio, MSR) node, a home base station, a network controller, an access node, a radio node, an access point (access point, AP), a transmitting node, a transceiver node, a baseband unit (baseband unit, BBU), a remote radio unit (remote radio unit, RRU), an active antenna unit (active antenna unit, AAU), a radio head (remote radio head, RRH), a central unit (central unit, CU), a distributed unit (distributed unit, DU), a radio unit (radio unit, RU), a central unit control plane (CU control plane, CU-CP) node, a central unit user plane (CU user plane, CU-UP) node, and a positioning node. The base station may be a macro base station, a micro base station, a relay node, a donor node or the like, or a combination thereof. The network device may alternatively be a communication module, a modem, or a chip that is disposed in the foregoing device or apparatus. The network device may alternatively be a mobile switching center, a device that takes on a base station function in device-to-device (device-to-device, D2D) communication, vehicle-to-everything (vehicle-to-everything, V2X) communication, and machine-to-machine (machine-to-machine, M2M) communication, a network-side device in a future communication network, a device that takes on a base station function in a future communication system, or the like. The network device may support networks with a same access technology or different access technologies. A specific technology and a specific device form factor that are used by the network device are not limited in embodiments of this application.

The network device may be fixed or movable. For example, the base stations 110b and 110c are stationary, and are responsible for wireless transmission and reception in one or more cells from the terminal device 120. A helicopter or an unmanned aerial vehicle 120c shown in FIG. 1 may be configured to serve as a mobile base station, and one or more cells may move based on a location of the mobile base station 120c. In another example, the helicopter or the unmanned aerial vehicle (120c) may be configured to serve as a terminal device that communicates with the satellite base station 110a.

In this application, a communication apparatus configured to implement functions of the access network may be an access network device, or may be a network device having some functions of the access network, or may be an apparatus that can support implementing the functions of the access network, such as a chip system, a hardware circuit, a software module, or a hardware circuit plus a software module. The apparatus may be mounted in an access network device or used together with an access network device. In the method in this application, an example in which the communication apparatus configured to implement the functions of the access network device is an access network device is used for description.

The terminal device may be an entity configured to receive or transmit a signal on a user side, for example, a mobile phone. The terminal device may be configured to connect people, things, and machines. The terminal device may communicate with one or more core networks via the network device. The terminal device includes a handheld device having a wireless connection function, another processing device connected to a wireless modem, an on-board device, and the like. The terminal device may be a portable, pocket-sized, handheld, computer built-in, or on-board mobile apparatus. The terminal device 120 may be widely used in various scenarios, such as cellular communication, D2D, V2X, point-to-point (point-to-point, P2P), machine-to-machine (machine-to-machine, M2M), machine-type communication (machine-type communication, MTC), internet of things (internet of things, IoT), virtual reality (virtual reality, VR), augmented reality (augmented reality, AR), industrial control, self driving, remote medical, a smart grid, smart furniture, a smart office, a smart wearable, smart transportation, a smart city, an unmanned aerial vehicle, a robot, remote sensing, passive sensing, positioning, navigation and tracking, and autonomous delivery and mobility. Some examples of the terminal device 120 are 3GPP standard user equipment (user equipment, UE), a fixed device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an unmanned aerial vehicle, a helicopter, an aerial vehicle, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device such as a smartwatch, a VR device, an AR device, a wireless terminal in industrial control (industrial control), a terminal in an Internet of Vehicles system, a wireless terminal in self driving (self driving), a wireless terminal in a smart grid (smart grid), a wireless terminal in transportation safety (transportation safety), a wireless terminal in a smart city (smart city) such as a smart fuel dispenser, a terminal device on a high-speed train, and a wireless terminal in a smart home (smart home) such as a smart speaker, a smart coffee machine, or a smart printer. The terminal device 120 may be a wireless device in the foregoing scenarios or an apparatus configured to be disposed in the wireless device, for example, a communication module, a modem, or a chip in the foregoing device. The terminal device may also be referred to as a terminal, a terminal device, user equipment (user equipment, UE), a mobile station (mobile station, MS), a mobile terminal (mobile terminal, MT), or the like. Alternatively, the terminal device may be a terminal device in a future wireless communication system. The terminal device may be used in a dedicated network device or a general-purpose device. A specific technology and a specific device form factor used by the terminal device are not limited in embodiments of this application.

Optionally, the terminal device may be configured to serve as a base station. For example, the UE may serve as a scheduling entity that provides a sidelink signal between UEs in V2X, D2D, P2P, or the like. As shown in FIG. 1, the cellular phone 120a and the car 120b communicate with each other by using sidelink signals. The cellular phone 120a communicates with the smart home device 120e without relaying communication signals via the base station 110b.

In this application, a communication apparatus configured to implement functions of the terminal device may be a terminal device, or may be a terminal device having some functions of the terminal device, or may be an apparatus that can support implementing the functions of the terminal device, for example, a chip system. The apparatus may be mounted in the terminal device or used together with the terminal device. In this application, the chip system may include a chip, or may include a chip and another discrete component. In the technical solutions provided in this application, an example in which the communication apparatus is a terminal device or UE is used for description.

Optionally, the wireless communication system usually includes a cell, the base station provides cell management, and the base station provides a communication service for a plurality of mobile stations (mobile station, MS) in the cell. The base station includes a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at one rack. Optionally, one cell may correspond to one carrier or component carrier.

In some deployments, the network device mentioned in embodiments of this application may be a CU, a DU, a device including a CU and a DU, or a device including a CU-CP, a CU-UP, and a DU node. For example, the network device may include a gNB-CU-CP, a gNB-CU-UP, and a gNB-DU.

In some deployments, a plurality of RAN nodes cooperate to assist a terminal in implementing radio access, and different RAN nodes separately implement some functions of a base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio unit, for example, included in an RRU, an AAU, or an RRH.

The RAN node may support one or more types of fronthaul interfaces, and different fronthaul interfaces correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If a fronthaul interface between the DU and the RU is another type of interface, compared with the CPRI, the interface performs transfer of some downlink and/or uplink baseband functions. For example, for downlink, one or more of precoding (precoding), digital beamforming (beamforming, BF), or inverse fast Fourier transform (inverse fast Fourier transform, IFFT)/cyclic prefix (cyclic prefix, CP) addition are transferred from the DU to the RU for implementation; and for uplink, one or more of digital beamforming (beamforming, BF) or fast Fourier transform (fast Fourier transform, FFT)/CP removal are transferred from the DU to the RU for implementation. In a possible implementation, the interface may be an enhanced common public radio interface (enhanced common public radio interface, eCPRI). In an eCPRI architecture, there are different split manners for the DU and RU, corresponding to different categories (category, Cat) of eCPRIs such as eCPRI Cat A, B, C, D, E, or F.

The eCPRI Cat A is used as an example. For downlink transmission, splitting is performed at layer mapping. The DU is configured to implement the layer mapping and one or more functions before the layer mapping (for example, one or more of encoding, rate matching, scrambling, modulation, and the layer mapping), and another function after the layer mapping (for example, one or more of RE mapping, digital beamforming (beamforming, BF), or inverse fast Fourier transform (inverse fast Fourier transform, IFFT)/cyclic prefix (cyclic prefix, CP) addition) is transferred to the RU for implementation. For uplink transmission, splitting is performed at RE demapping. The DU is configured to implement the demapping and one or more functions before the demapping (for example, one or more of the following functions: decoding, de-rate matching, descrambling, demodulation, inverse discrete Fourier transform (inverse discrete Fourier transform, IDFT), channel equalization, and the RE demapping), and another function after the demapping (for example, one or two of digital BF or FFT/CP removal) is transferred to the RU for implementation. It may be understood that, for function descriptions of DUs and RUs corresponding to various categories of eCPRIs, refer to an eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus configured to implement a function of the network device may be a network device, or may be an apparatus that can support the network device in implementing the function, such as a chip system, a hardware circuit, a software module, or a hardware circuit plus a software module. The apparatus may be mounted in the network device or used together with the network device. In embodiments of this application, an example in which the apparatus configured to implement the function of the network device is a network device is merely used for description, and constitutes no limitation on the solutions in embodiments of this application.

It may be understood that this application may be applied between a network device and a terminal device.

Communication between the network device and the terminal device complies with a specified protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the network device and the terminal device may further include an artificial intelligence (artificial intelligence, AI) layer for transmission of data related to an AI function.

Data transmission between a network device and a terminal device is used as an example. Data transmission needs to pass through the user plane protocol layer, for example, through the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer. Then, the MAC layer generates a transport block, and subsequently wireless transmission is performed through the physical layer. The data is correspondingly encapsulated at each layer. For example, data received by a layer from an upper layer of the layer is considered as a service data unit (service data unit, SDU) of the layer, is encapsulated at the layer into a protocol data unit (protocol data unit, PDU), and is then transferred to a next layer.

For example, the terminal device may further have an application layer and a non-access stratum. The application layer may be used for providing a service for an application installed on the terminal device. For example, downlink data received by the terminal device may be sequentially transmitted from the physical layer to the application layer, and then provided by the application layer for the application. In another example, the application layer may obtain data generated by the application, sequentially transmit the data to the physical layer, and send the data to another communication apparatus. The non-access stratum may be used for forwarding user data, for example, forwarding uplink data received from the application layer to the SDAP layer, or forwarding downlink data received from the SDAP layer to the application layer.

It should be understood that quantities and types of devices in the communication system shown in FIG. 1 are merely used as an example. This application is not limited thereto. During actual application, the communication system may further include more terminal devices and more access network devices, and may further include another network element, for example, may include a core network device and/or a network element configured to implement an artificial intelligence function.

It may be understood that all or some of functions implemented by one or more of the terminal device, the access network device, the core network device, or the network element configured to implement the artificial intelligence function may be virtualized, that is, implemented by one or more of a dedicated processor or a general-purpose processor and a corresponding software module. Because the terminal device and the access network device are related to an air interface transmission interface, a transceiver function of the interface may be implemented by hardware. Core network devices such as an operation, administration, and maintenance (operation, administration, and maintenance, OAM) network element can all be virtualized. Optionally, one or more functions of the virtualized terminal device, access network device, core network device, or network element configured to implement the artificial intelligence function may be implemented by a cloud device, for example, implemented by a cloud device in an over-the-top (over-the-top, OTT) system.

Currently, satellite communication has been introduced as a communication scenario of 5G communication, and is referred to as a non-terrestrial network (non-terrestrial network, NTN). The satellite communication can support various 5G terminal devices, and can also support IoT-type terminal devices. Compared with terrestrial communication, satellite communication has unique advantages. For example, the satellite communication can provide wider coverage areas, and satellite base stations are not vulnerable to natural disasters or external forces. If satellite communication is introduced to future 5G communication, communication services can be provided for some areas that cannot be covered by terrestrial communication networks, such as oceans and forests; reliability of 5G communication can be enhanced, for example, higher-quality communication services can be provided for users on transportation vehicles such as airplanes and trains; and more data transmission resources can be provided for 5G communication, increasing network rates. Therefore, supporting both terrestrial communication and satellite communication is an inevitable trend of future 5G communication, and has great benefits in terms of wide coverage, reliability, multi-connection, high throughput, and the like.

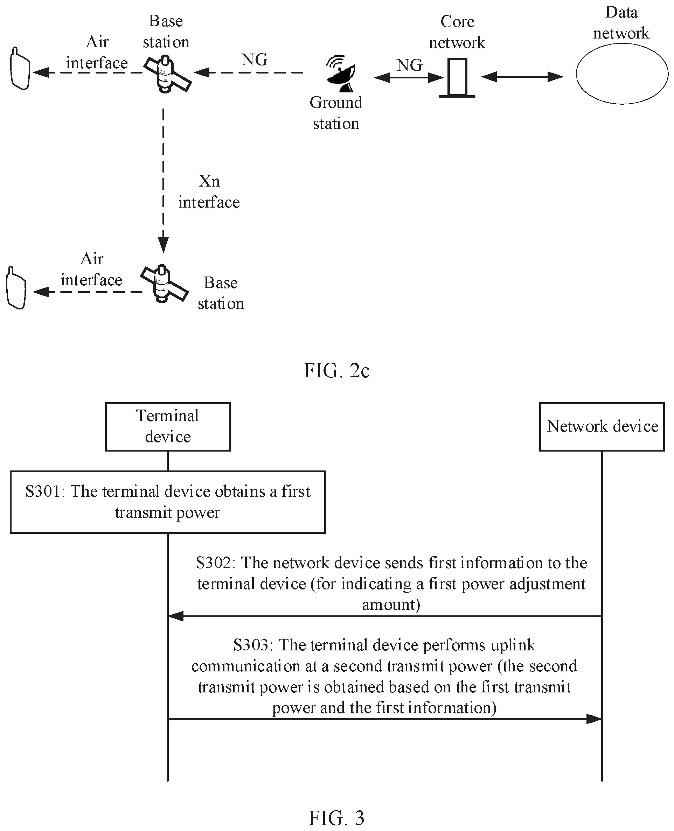

FIG. 2a to FIG. 2c are diagrams of application scenarios of a satellite-terrestrial integrated network. A terminal device on the ground can access a network through an air interface (the air interface may be of various types, for example, a 5G air interface). In FIG. 2a, a base station may be deployed on the ground and connected to a ground station that communicates with a satellite. In FIG. 2b, a base station may be deployed on a satellite. The satellite is connected to a ground station via a radio link. The ground station and a ground base station are connected to a core network in a wired or wireless manner. A radio link may exist between satellites. If the satellite has only a pass-through forwarding function (that is, a corresponding base station is deployed on the ground), only pass-through forwarding is implemented between the satellites. If a base station or some functions of the base station are deployed on the satellite, signaling exchange and user data transmission between base stations can be completed between the satellites, as shown in FIG. 2c.

Communication of a terminal device needs to meet specific absorption rate (specific absorption rate, SAR) requirements, that is, human radiation exposure requirements. Currently, a set of relatively strict procedures is stipulated to ensure that high-power uplink transmission of the terminal device does not exceed a specific ratio. By default, a transmit power of the terminal device for transmitting uplink signals is 23 dBm. If the transmit power of the terminal device exceeds 23 dBm, power back-off needs to be performed via protocol agreements or network-side indications. Within a specific period of time, excessive cumulative duration of high-power transmission fails to meet requirements for human exposure to radiation from communication signals.

In an NTN scenario, due to poor link budget of satellite communication, an IoT terminal device typically requires more than two repetitions of uplink data, and a transmit power of the terminal device is *P_{CMAX,c}*. *P_{CMAX,c}* has a corresponding upper limit and a corresponding lower limit, which can meet human radiation exposure requirements (a calculation formula of *P_{CMAX,c}* includes a plurality of parameters, for example, a power back-off value, to limit its upper limit) and other various radio frequency indicators (for example, interference).

The power back-off value of the transmit power of the terminal device is determined by a parameter *P-mac* indicated by a network side via RRC signaling. For a terminal device that does not support RRC reconfiguration, RRC signaling is configured once and is not updated when the terminal device is in a connected state. If the terminal device remains in the connected state for an extended period, the network side configures conservative *P-mac*. To be specific, a power back-off value obtained through calculation causes the terminal device to reduce its transmit power to 23 dBm. Otherwise, there is a risk of failing to meet radiation requirements. Flexibility of power adjustment for high-power terminals is greatly limited.

This application provides a power adjustment solution. A network device indicates a power adjustment amount, so that a terminal device can obtain a new transmit power based on an initial transmit power and the power adjustment amount, and perform uplink communication at the new transmit power, thereby allowing for flexible adjustment of the transmit power of the terminal device.

FIG. 3 is a schematic flowchart of a communication method according to an embodiment of this application. For example, the method may include the following steps.

S301: A terminal device obtains a first transmit power.

For example, the terminal device may obtain, through the following several implementations, the first transmit power for actual uplink communication.

In an implementation, the first transmit power is based on a maximum transmit power *P_{EMAX,c}* configured by a network device. Specifically, the network device may configure the maximum transmit power *P_{EMAX,c}* based on a capability of the terminal device, and the terminal device may determine the actual first transmit power based on the maximum transmit power.

For example, for a terminal device that requires more than two repetitions of transmission, the first transmit power is equal to *P_{CMAX,c}*, where *P_{CMAX,c}* has an upper limit and a lower limit, and both the upper limit and the lower limit are related to the maximum transmit power *P_{EMAX,c}*.

In another implementation, the first transmit power is a maximum transmit power of the terminal device. The network device may not configure a maximum transmit power, or the terminal device does not adopt a maximum transmit power configured by the network device, and the terminal device obtains the maximum transmit power determined based on a capability of the terminal device, historical information of transmit power, and the like, as the actual first transmit power.

In still another implementation, the first transmit power is a minimum transmit power of the terminal device. The network device may not configure a maximum transmit power, or the terminal device does not adopt a maximum transmit power configured by the network device, and the terminal device obtains the minimum transmit power determined based on a capability of the terminal device, historical information of transmit power, and the like, as the actual first transmit power, to meet human radiation exposure requirements.

In still another implementation, the first transmit power is an intermediate value of transmit power of the terminal device. The intermediate value of transmit power is an intermediate value between the maximum transmit power and the minimum transmit power. The network device may not configure a maximum transmit power, or the terminal device does not adopt a maximum transmit power configured by the network device, and the terminal device obtains the intermediate value of transmit power determined based on a capability of the terminal device, historical information of transmit power, and the like, as the actual first transmit power, to meet human radiation exposure requirements.

It may be understood that, relative to a subsequently dynamically adjusted transmit power, the first transmit power may be an initial transmit power or a static transmit power.

S302: The network device sends first information to the terminal device. Correspondingly, the terminal device receives the first information.

The network device may send the first information to the terminal device based on a scheduling requirement, a channel status, and the like, to indicate the terminal device to adjust the transmit power.

In an implementation, the first information indicates a first power adjustment amount.

The first power adjustment amount may be a positive value or a negative value. In other words, the transmit power of the terminal device may be increased, or the transmit power of the terminal device may be decreased.

For example, when the first transmit power is based on the maximum transmit power *P_{EMAX,c}* configured by the network device, the first power adjustment amount may be a positive value (an increase amount) or a negative value (a decrease amount).

When the first transmit power is the maximum transmit power of the terminal device, the first power adjustment amount is a negative value.

When the first transmit power is the minimum transmit power of the terminal device, the first power adjustment amount is a positive value.

When the first transmit power is the intermediate value of transmit power of the terminal device, the first power adjustment amount may be a positive value or a negative value.

The first information indicates the first power adjustment amount. Optionally, a correspondence between one or more indexes and one or more power adjustment amounts may be pre-stored or pre-configured in the terminal device, and the first information includes an index corresponding to the first power adjustment amount, so that signaling overheads can be reduced. The terminal device may determine, based on the index corresponding to the first power adjustment amount included in the first information, the first power adjustment amount corresponding to the index.

In another implementation, a correspondence between one or more power levels and one or more transmit powers may be pre-stored or pre-configured in the terminal device, and the first information includes a power level corresponding to a second transmit power. After receiving the first information, the terminal device may determine the second transmit power based on the power level indicated by the first information.

For example, the first information may be carried in a MAC CE or DCI.

Optionally, the terminal device may further report, to the network device, a capability of the terminal device for performing high-power transmission, including different high-power levels that are supported. For example, a first high-power level is 26 dBm, a second high-power level is 29 dBm, and a third high-power level is 32 dBm. The network device may determine, based on the capability of the terminal device, whether to indicate the terminal device to adjust the transmit power.

S303: The terminal device performs uplink communication at a second transmit power. Correspondingly, the network device receives an uplink signal from the terminal device.

The second transmit power is obtained based on the first transmit power and the first information.

The uplink signal is sent by the terminal device at the second transmit power.

It may be understood that the second transmit power may be considered as a new transmit power relative to the first transmit power. The new transmit power may be higher than 23 dBm, so that the terminal device can transmit at high power.

According to the communication method provided in this embodiment of this application, the network device indicates a power adjustment amount, so that the terminal device can obtain a new transmit power based on an initial transmit power and the power adjustment amount, and perform uplink communication at the new transmit power, thereby allowing for flexible adjustment of the transmit power of the terminal device.

The foregoing embodiment describes a case in which the network device may indicate the first power adjustment amount to indicate the terminal device to adjust the transmit power. The following embodiment describes how the terminal device specifically performs power adjustment based on the first power adjustment amount.

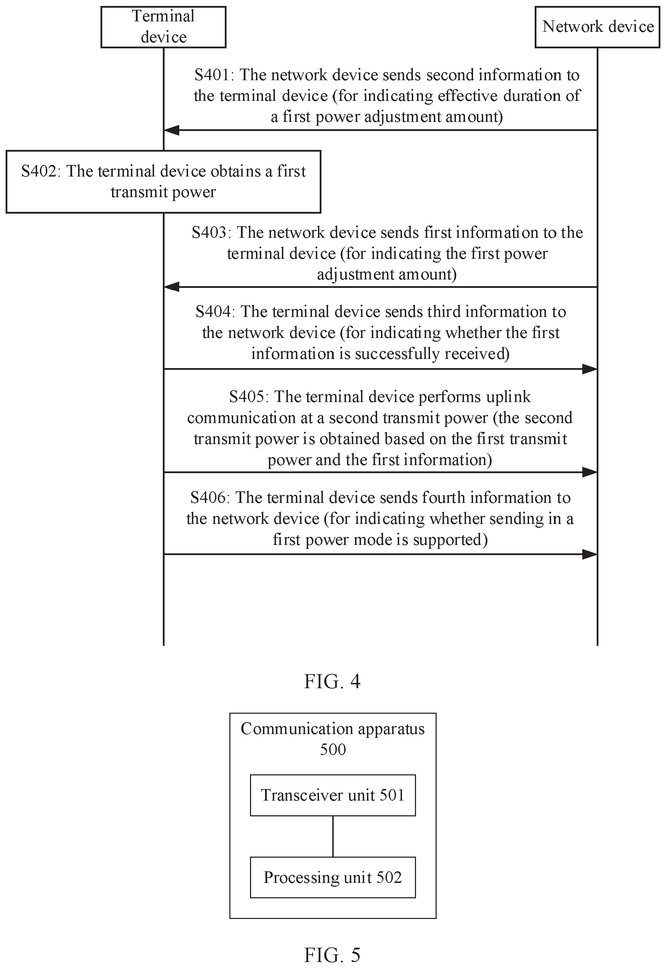

FIG. 4 is a schematic flowchart of another communication method according to an embodiment of this application. For example, the method may include the following steps.

S401: The network device sends second information to the terminal device. Correspondingly, the terminal device receives the second information.

To meet human radiation exposure requirements, the network device cannot indicate the terminal device to continuously transmit at high power. Therefore, effective duration of the first power adjustment amount needs to be indicated.

In this embodiment, the network device may send the second information to the terminal device, where the second information indicates the effective duration of the first power adjustment amount. For example, the second information includes the effective duration of the first power adjustment amount, or includes a base value of the effective duration of the first power adjustment amount.

For example, the second information may be carried in RRC signaling, a MAC CE, or the like.

Further, the RRC signaling, the MAC CE, or the like may further include indication information of the maximum transmit power P_{EMAX,c}. The terminal device may determine the first transmit power based on the maximum transmit power configured by the network device.

S402: The terminal device obtains a first transmit power.

For a specific implementation of this step, refer to step S301 in the embodiment shown in FIG. 3. Details are not described herein again.

S403: The network device sends first information to the terminal device. Correspondingly, the terminal device receives the first information.

The first information indicates the first power adjustment amount.

For a specific implementation of this step, refer to step S302 in the embodiment shown in FIG. 3.

Further, to meet human radiation exposure requirements, the network device may further indicate the effective period of the first power adjustment amount by using the first information, to prevent the terminal device from continuously transmitting at high power. The first information further indicates the effective period of the first power adjustment amount, and the effective period includes at least one of the following information: start effective time, effective duration, or end effective time. For example, the first information may indicate the start effective time and the end effective time, so that the effective duration can be determined. In another example, the first information may indicate the start effective time, and the effective duration may be predefined or pre-configured. In another example, the first information may indicate the end effective time, and the start effective time is determined according to a preset rule.

Alternatively, the first information further indicates effective duration of the first power adjustment amount. For example, the first information includes effective duration of the first power adjustment amount, or includes an offset of effective duration of the first power adjustment amount.

When the second information indicates the base value of the effective duration of the first power adjustment amount, the effective duration of the first power adjustment amount is equal to a sum of the base value and the offset of the effective duration indicated by the first information.

A sequence of performing step S401 and step S403 is not limited in embodiments. The two steps may be performed simultaneously. To be specific, the network device may indicate the effective duration of the first power adjustment amount by using the second information while indicating the first power adjustment amount by using the first information. Alternatively, S401 may be performed before S403. To be specific, the network device may indicate the effective duration of the first power adjustment amount in advance by using the second information before indicating the first power adjustment amount by using the first information. Alternatively, S403 is performed before S401. To be specific, the network device may indicate the effective duration of the first power adjustment amount by using the second information after indicating the first power adjustment amount by using the first information.

S404: The terminal device sends third information to the network device. Correspondingly, the network device receives the third information.

The third information indicates whether the first information is successfully received.

For example, when the first information is carried in a MAC CE, and an HARQ of a process carrying the MAC CE message is enabled, decoding the MAC CE requires providing acknowledgment (acknowledgment, ACK) or non-acknowledgment (non-acknowledgment, NACK) feedback. The third information may be the ACK or NACK feedback.

When the first information is carried in a MAC CE, and an HARQ of a process carrying the MAC CE message is disabled, decoding the MAC CE does not require providing ACK or NACK feedback.

This step is an optional step.

S405: The terminal device performs uplink communication at a second transmit power. Correspondingly, the network device receives an uplink signal from the terminal device.

The second transmit power is obtained based on the first transmit power and the first information. The uplink signal is sent by the terminal device at the second transmit power.

For a specific implementation of this step, refer to step S303 in the embodiment shown in FIG. 3. Details are not described herein again.

It may be understood that, within the effective duration of the first power adjustment amount, the terminal device performs uplink communication at the second transmit power; and after the first power adjustment amount becomes invalid, the terminal device reverts to the first transmit power or a default transmit power level to perform uplink communication.

The following specifically describes implementations of the start effective time of the first power adjustment amount.

In an implementation, because the terminal device needs to perform parsing after receiving the first information, the first power adjustment amount may take effect after first time following reception of the first information by the terminal device. Further, the terminal device performs power adjustment based on the first power adjustment amount, and the terminal device needs to perform uplink communication on an uplink subframe based on an adjusted power. Therefore, the start effective time of the first power adjustment amount is specifically a start moment of the first uplink subframe, and the first uplink subframe is the first uplink subframe after the first time following reception of the first information.

The first time may be agreed on in a protocol or configured by the network device. This is not limited in embodiments.

For example, the first time may be 0. In this case, the first power adjustment amount may take effect when the terminal device receives the first information.

For example, the first information is carried in a MAC CE. In a case that an HARQ of a process carrying the MAC CE message is enabled, if ACK/NACK feedback is within the first time, the terminal device sends the ACK/NACK at the first transmit power; or if ACK/NACK feedback is after the first time, the terminal device sends the ACK/NACK at the second transmit power.

In another implementation, because the terminal device needs to perform parsing after receiving the first information, the first power adjustment amount takes effect after second time following sending of the third information. Further, the terminal device performs power adjustment based on the first power adjustment amount, and the terminal device needs to perform uplink communication on an uplink subframe based on an adjusted power. Therefore, the start effective time of the first power adjustment amount is specifically a start moment of the first uplink subframe, and the first uplink subframe is the first uplink subframe after the second time following sending of the third information.

The second time may be agreed on in a protocol or configured by the network device. This is not limited in embodiments.

For example, the first information is carried in a MAC CE, and an HARQ of a process carrying the MAC CE message is enabled, that is, decoding the MAC CE requires providing ACK or NACK feedback. If the first power adjustment amount takes effect after the ACK or NACK feedback is sent, the terminal device sends the ACK/NACK at the first transmit power.

In still another implementation, because the terminal device needs to perform parsing after receiving the first information, the first power adjustment amount takes effect when the third information is sent. Further, the terminal device performs power adjustment based on the first power adjustment amount, and the terminal device needs to perform uplink communication on an uplink subframe based on an adjusted power. Therefore, the start effective time of the first power adjustment amount is specifically a start moment of the first uplink subframe, and the first uplink subframe is the first uplink subframe following sending of the third information.

For example, the first information is carried in a MAC CE, an HARQ of a process carrying the MAC CE message is enabled, that is, decoding the MAC CE requires providing ACK or NACK feedback, and the ACK/NACK may be sent at a power adjusted based on the first power adjustment amount.

In still another implementation, the first power adjustment amount takes effect when the first transmit power becomes invalid. The first transmit power may be determined based on a second power adjustment amount, and the second power adjustment amount has specific effective duration. The first power adjustment amount takes effect at end effective time of the second power adjustment amount, that is, takes effect when the first transmit power becomes invalid. Further, the terminal device performs power adjustment based on the first power adjustment amount, and the terminal device needs to perform uplink communication on an uplink subframe based on an adjusted power. Therefore, the start effective time of the first power adjustment amount is specifically a start moment of the first uplink subframe, and the first uplink subframe is the first uplink subframe after end effective time of the first transmit power.

In another implementation, the first information is received within the effective duration of the second power adjustment amount, where the first information indicates the first power adjustment amount. With reference to the foregoing several implementations of the start effective time of the first power adjustment amount, regardless of whether the start effective time of the first power adjustment amount is within the effective duration of the second power adjustment amount, adjustment may be performed based on the first power adjustment amount. In other words, the start effective time of the first power adjustment amount may be within the effective duration of the second power adjustment amount or after the effective duration of the second power adjustment amount.

The first power adjustment amount may be adjusted based on the first transmit power adjusted based on the second power adjustment amount, or adjusted based on a transmit power before adjustment based on the second power adjustment amount.

S406: The terminal device sends fourth information to the network device. Correspondingly, the network device receives the fourth information. This step is an optional step.

After the terminal device is scheduled to transmit at high power for a period of time, the terminal device may count duration of the high-power transmission, and send the fourth information, where the fourth information indicates whether transmission in a first power mode is supported subsequently. The first power mode is a high-power transmission mode. The first power mode is relative to a default power mode. In the default power mode, a transmit power is, for example, 23 dBm. The terminal device sends the fourth information, to ensure that the transmit power of the terminal is within a range specified by human radiation exposure requirements. The network device may determine, based on the fourth information, whether to perform subsequent power adjustment, and an adjustment amount.

For example, the fourth information may be carried in at least one of the following information: a buffer status report (buffer status report, BSR), hybrid automatic repeat request feedback information, or a random access request.

The terminal device may implicitly or explicitly indicate, by using at least one of the foregoing information, whether transmission in the first power mode is supported subsequently.

The terminal device periodically reports the buffer status report to the network device. The terminal device may indicate, by using the buffer status report, whether transmission in the first power mode is supported subsequently.

In an example, to improve reliability of the transmitted buffer status report, the terminal device scrambles the buffer status report. In this example, the terminal device scrambles the buffer status report by using a first scrambling scheme, and the network device may learn, after receiving the buffer status report scrambled by using the first scrambling scheme, that the terminal device supports continuing to transmit in the first power mode. Therefore, in this manner, it can be indicated whether the terminal device supports continuing to transmit in the first power mode. If the terminal device scrambles the buffer status report by using another scrambling scheme, it is not indicated whether the terminal device supports continuing to transmit in the first power mode, or it is indicated that the terminal device does not support continuing to transmit in the first power mode. This manner introduces no additional indication overheads, and is an implicit indication manner.

In another example, the terminal device may include indication information in the buffer status report, where the indication information indicates whether the terminal device supports continuing to transmit in the first power mode. For example, in a case that the indication information is one bit, if a value of the one bit is "1", the terminal device supports continuing to transmit in the first power mode; or if a value of the one bit is "0", the terminal device does not support continuing to transmit in the first power mode.

When the network device adjusts the power of the terminal device by using a MAC CE, that is, when the MAC CE indicates the first power adjustment amount, and HARQ feedback is enabled, the terminal device needs to send hybrid automatic repeat request feedback information, that is, ACK/NACK, to the network device. The terminal device may indicate, by using the hybrid automatic repeat request feedback information, whether transmission in the first power mode is supported subsequently.

In an example, to improve reliability of the transmitted hybrid automatic repeat request feedback information, the terminal device scrambles the hybrid automatic repeat request feedback information. In this example, if the terminal device scrambles the hybrid automatic repeat request feedback information by using a second scrambling scheme, the network device may learn, after receiving the hybrid automatic repeat request feedback information scrambled by using the second scrambling scheme, that the terminal device supports continuing to transmit in the first power mode. Therefore, in this manner, it can be indicated whether the terminal device supports continuing to transmit in the first power mode. If the terminal device scrambles the hybrid automatic repeat request feedback information by using another scrambling scheme, it is not indicated whether the terminal device supports continuing to transmit in the first power mode, or it is indicated that the terminal device does not support continuing to transmit in the first power mode. This manner introduces no additional indication overheads, and is an implicit indication manner.

In another example, the terminal device may include indication information in the hybrid automatic repeat request feedback information, where the indication information indicates whether the terminal device supports continuing to transmit in the first power mode. For example, in a case that the indication information is one bit, if a value of the one bit is "1", the terminal device supports continuing to transmit in the first power mode; or if a value of the one bit is "0", the terminal device does not support continuing to transmit in the first power mode.

When accessing the network, the terminal device initiates random access to the network device. The terminal device may send a specific random access preamble sequence to the network device, to indicate whether transmission in the first power mode is supported subsequently. For example, the terminal device sends a first random access preamble sequence to indicate whether transmission in the first power mode is supported subsequently. After receiving the first random access preamble sequence, the network device may learn that the terminal device subsequently supports transmission in the first power mode. If the terminal device sends another random access preamble sequence, it is not indicated whether the terminal device supports continuing to transmit in the first power mode, or it is indicated that the terminal device does not support continuing to transmit in the first power mode. This indication manner introduces no additional overheads, thereby reducing signaling overheads.

According to the communication method provided in this embodiment of this application, the network device indicates a power adjustment amount, so that the terminal device can obtain a new transmit power based on an initial transmit power and the power adjustment amount, and perform uplink communication at the new transmit power, thereby allowing for flexible adjustment of the transmit power of the terminal device.

To meet human radiation exposure requirements, the network device may further indicate the effective duration of the first power adjustment amount by using the second information, to prevent the terminal device from continuously transmitting at high power, and enable the terminal device to accurately adjust the transmit power.

After the terminal device is scheduled to transmit at high power for a period of time, the terminal device may count duration of the high-power transmission, and send the fourth information to indicate whether transmission in the first power mode is supported.

The method is applicable to any terminal device, and in particular, to a terminal device that supports frequency division multiplexing (frequency division duplexing, FDD). The method can more flexibly support transmit power adjustment of an FDD high-power terminal device, and can also meet human radiation exposure requirements.

It may be understood that, in the foregoing embodiments, the method and/or step implemented by the terminal device may be implemented by a component (such as a chip or a circuit) used in the terminal device, and the method and/or step implemented by the network device may be implemented by a component (such as a chip or a circuit) used in the network device.

The foregoing mainly describes the solutions provided in embodiments of this application from a perspective of interaction between the terminal device and the network device. Correspondingly, embodiments of this application further provide a communication apparatus. The communication apparatus is configured to implement the foregoing various methods. The communication apparatus may be the terminal device in the foregoing method embodiment, or may be a component that can be used in the terminal device. Alternatively, the communication apparatus may be the network device in the foregoing method embodiment, or may be a component that can be used in the network device. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing unit. The integrated module may be implemented in a form of hardware, or may be implemented in a form of a software functional module. It should be noted that, in embodiments of this application, division into the modules is an example and is merely logical function division, and may be other division during actual implementation.

Based on the same concept of the foregoing communication method, this application further provides the following communication apparatuses.

FIG. 5 is a diagram of a structure of a communication apparatus according to an embodiment of this application. The communication apparatus 500 includes a transceiver unit 501 and a processing unit 502.

When the communication apparatus is configured to implement functions of the terminal device in the foregoing method embodiment, the transceiver unit 501 is configured to perform the operations of the terminal device in step S302 and step S303 in the embodiment shown in FIG. 3, and the processing unit 502 is configured to perform step S301 in the embodiment shown in FIG. 3; or the transceiver unit 501 is configured to perform the operations of the terminal device in step S401 and step S403 to step S406 in the embodiment shown in FIG. 4, and the processing unit 502 is configured to perform step S402 in the embodiment shown in FIG. 4.

When the communication apparatus is configured to implement functions of the network device in the foregoing method embodiment, the transceiver unit 501 is configured to perform the operations of the network device in step S302 and step S303 in the embodiment shown in FIG. 3; or the transceiver unit 501 is configured to perform the operations of the network device in step S401 and step S403 to step S406 in the embodiment shown in FIG. 4.

For specific implementations of the transceiver unit 501 and the processing unit 502, refer to the descriptions in the foregoing method embodiments.

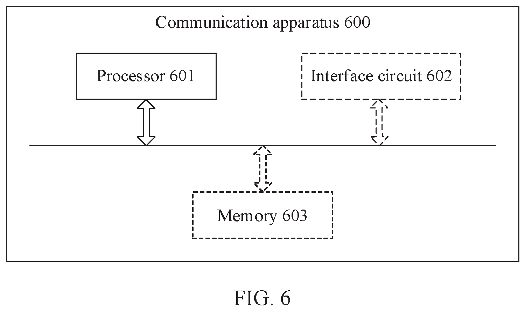

FIG. 6 is a diagram of a structure of another communication apparatus according to an embodiment of this application. The communication apparatus 600 includes one or more processors 601 (one processor is used as an example in the figure). Optionally, the communication apparatus 600 may further include an interface circuit 602 (represented by dashed lines in the figure), and the processor 601 and the interface circuit 602 are coupled to each other. It may be understood that the interface circuit 602 may be a transceiver or an input/output interface. Optionally, the communication apparatus 600 may further include a memory 603 (represented by dashed lines in the figure). The memory 603 is configured to store instructions executed by the processor 601, or store input data required for running instructions by the processor 601, or store data generated after the processor 601 runs instructions.

When the communication apparatus is configured to implement functions of the terminal device in the foregoing method embodiment, the interface circuit 602 is configured to perform the operations of the terminal device in step S302 and step S303 in the embodiment shown in FIG. 3, and the processor 601 is configured to perform step S301 in the embodiment shown in FIG. 3; or the interface circuit 602 is configured to perform the operations of the terminal device in step S401 and step S403 to step S406 in the embodiment shown in FIG. 4, and the processor 601 is configured to perform step S402 in the embodiment shown in FIG. 4.

When the communication apparatus is configured to implement functions of the network device in the foregoing method embodiment, the interface circuit 602 is configured to perform the operations of the network device in step S302 and step S303 in the embodiment shown in FIG. 3; or the interface circuit 602 is configured to perform the operations of the network device in step S401 and step S403 to step S406 in the embodiment shown in FIG. 4.

When the communication apparatus is a chip used in the terminal device, the chip implements the functions of the terminal device in the foregoing method embodiment. The chip receives information from another module (for example, a radio frequency module or an antenna) in the terminal device, where the information is sent by the network device to the terminal device; or the chip sends information to another module (for example, a radio frequency module or an antenna) in the terminal device, where the information is sent by the terminal device to the network device.

When the communication apparatus is a chip used in the network device, the chip implements the functions of the network device in the foregoing method embodiment. The chip receives information from another module (for example, a radio frequency module or an antenna) in the network device, where the information is sent by the terminal device to the network device; or the chip sends information to another module (for example, a radio frequency module or an antenna) in the network device, where the information is sent by the network device to the terminal device.

In addition, it should be noted that, the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation); and the processing unit is an integrated processor, a microprocessor, or an integrated circuit.

In this application, division into modules is an example, and is merely logical function division. During actual implementation, another division manner may be used. In addition, functional modules in examples of this application may be integrated into one processor, or each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

An embodiment of this application further provides a computer-readable storage medium. The computer-readable storage medium stores a computer program or instructions. When the computer program or the instructions are executed, the method in the foregoing embodiments is implemented.

An embodiment of this application further provides a computer program product including instructions. When the instructions are run on a computer, the computer is enabled to perform the method in the foregoing embodiments.

An embodiment of this application further provides a communication system, including the foregoing communication apparatus.

An embodiment of this application further provides a circuit. The circuit is coupled to a memory. The circuit is configured to perform the method in the foregoing embodiments. The circuit may include a chip circuit.

When the communication apparatus is a module used in a network device, the module in the network device implements functions of the network device in the foregoing method embodiments. The module in the network device receives information from another module (for example, a radio frequency module or an antenna) in the network device, where the information is sent by the terminal device to the network device; or the module in the network device sends information to another module (for example, a radio frequency module or an antenna) in the network device, where the information is sent by the network device to the terminal device. Herein, the module in the network device may be a baseband chip in the network device, or may be a CU, a DU, or another module, or may be an apparatus in an O-RAN architecture, for example, an apparatus like an open CU or an open DU.

It should be noted that one or more of the foregoing units or units may be implemented by software, hardware, or a combination of software and hardware. When any one of the foregoing units or units is implemented by software, the software exists in a form of computer program instructions, and is stored in the memory. The processor may be configured to execute the program instructions and implement the foregoing method procedures.

In this application, the processor may be a general-purpose processor, a digital signal processor, an application-specific integrated circuit, a field programmable gate array or another programmable logic device, a discrete gate or a transistor logic device, a discrete hardware component, or all or some of circuits configured to implement a processing function in the foregoing devices, and may implement or perform the methods, steps, and logical block diagrams disclosed in this application. The general-purpose processor may be a microprocessor or any conventional processor. The steps of the method disclosed with reference to this application may be directly performed by a hardware processor, or may be performed by a combination of hardware in a processor and a software module.

When the foregoing units or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedures.

Optionally, an embodiment of this application further provides a chip system, including at least one processor and an interface. The at least one processor is coupled to a memory through the interface. When the at least one processor runs a computer program or instructions in the memory, the chip system is enabled to perform the method in any one of the foregoing method embodiments. Optionally, the chip system may include a chip, or may include a chip and another discrete device. This is not specifically limited in embodiments of this application.

The memory in this application may alternatively be a circuit or any other apparatus that can implement a storage function, and is configured to store program instructions and/or data. The memory is any other medium that can carry or store expected program code in a form of an instruction or data structure and that can be accessed by a computer, but is not limited thereto. For example, the memory may be a non-volatile memory such as a digital versatile disc (digital versatile disc, DVD), a hard disk drive (hard disk drive, HDD), or a solid-state drive (solid-state drive, SSD), or may be a volatile memory (volatile memory), for example, a random access memory (random access memory, RAM).

The terms "include", "have", and any variations thereof mentioned in the foregoing descriptions of this application are intended to cover a non-exclusive inclusion. For example, a process, method, system, product, or device that includes a series of steps or units is not limited to the listed steps or units, but further optionally includes other steps or units that are not listed, or further optionally includes other steps or units inherent to the process, method, product, or device. It should be noted that, in this application, the word such as "example" or "for example" is intended to indicate giving an example, an illustration, or a description. Any method or design scheme described as an "example" or "for example" in this application should not be construed as being more preferred or having more advantages than another method or design scheme. To be precise, use of the word such as "example" or "for example" is intended to present a related concept in a specific manner.

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural. In addition, to clearly describe the technical solutions in embodiments of this application, terms such as "first" and "second" are used in embodiments of this application to distinguish between same items or similar items that provide basically same functions and effects. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner for ease of understanding.

All or some of the foregoing embodiments may be implemented by using software, hardware, firmware, or any combination thereof. When implemented by using a software program, all or some of the foregoing embodiments may be implemented in a form of a computer program product. The computer program product includes one or more computer instructions. When the computer program instructions are loaded and executed on a computer, all or some of the procedure or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, network device, or data center to another website, computer, network device, or data center in a wired (for example, a coaxial cable, an optical fiber, or a digital subscriber line (digital subscriber line, DSL)) or wireless (for example, infrared, radio, or microwave) manner.

Although this application is described with reference to embodiments, in a process of implementing this application that claims protection, a person skilled in the art may understand and implement another variation of the disclosed embodiments by viewing the accompanying drawings, disclosed content, and appended claims. In the claims, a single processor or another unit may implement several functions enumerated in the claims. Some measures are recorded in dependent claims that are different from each other, but this does not mean that these measures cannot be combined to produce great effects.

It may be understood that various numbers in embodiments of this application are merely used for differentiation for ease of description, and are not used to limit the scope of embodiments of this application. Sequence numbers of the foregoing processes do not mean a sequence of performing the processes, and the sequence of performing the processes should be determined based on functions and internal logic of the processes.

In the foregoing embodiments, descriptions of embodiments have respective focuses. For a part that is not described in detail in an embodiment, refer to related descriptions in other embodiments.

Components in the apparatus in embodiments of this application may be combined, divided, and deleted based on an actual requirement. A person skilled in the art may combine different embodiments and features of different embodiments described in this specification.

In this application, without a logical contradiction, mutual reference can be made between examples. For example, mutual reference can be made between methods and/or terms in the method embodiments, mutual reference can be made between functions and/or terms in the apparatus embodiments, and mutual reference can be made between functions and/or terms in the apparatus examples and the method examples.

## Claims

1. A communication method, wherein the method comprises:
obtaining a first transmit power;
receiving first information, wherein the first information indicates a first power adjustment amount; and
performing uplink communication at a second transmit power, wherein the second transmit power is obtained based on the first transmit power and the first information.

2. The method according to claim 1, wherein the first transmit power is based on a maximum transmit power configured by a network device, or the first transmit power is a maximum transmit power, a minimum transmit power, or an intermediate value of transmit power of a terminal device, wherein the intermediate value of transmit power is an intermediate value between the maximum transmit power and the minimum transmit power.

3. The method according to claim 1 or 2, wherein the first information further indicates effective duration of the first power adjustment amount.

4. The method according to claim 1 or 2, wherein the first information further indicates an effective period of the first power adjustment amount, and the effective period comprises at least one of the following information: start effective time, effective duration, or end effective time.

5. The method according to claim 1 or 2, wherein the first information comprises effective duration of the first power adjustment amount, or comprises an offset of effective duration of the first power adjustment amount.

6. The method according to any one of claims 1 to 3, wherein the method further comprises:
receiving second information, wherein the second information indicates the effective duration of the first power adjustment amount.

7. The method according to claim 6, wherein the second information comprises the effective duration of the first power adjustment amount, or comprises a base value of the effective duration of the first power adjustment amount.

8. The method according to any one of claims 1 to 7, wherein
the first power adjustment amount takes effect after first time following reception of the first information; or
the first power adjustment amount takes effect after second time following sending of third information; or
the first power adjustment amount takes effect when the third information is sent; or
the first power adjustment amount takes effect when the first transmit power becomes invalid, wherein
the third information indicates whether the first information is successfully received.

9. The method according to any one of claims 1 to 8, wherein the start effective time of the first power adjustment amount is a start moment of a first uplink subframe, and the first uplink subframe is any one of the following:
a first uplink subframe after the first time following reception of the first information; or
a first uplink subframe after the second time following sending of the third information; or
a first uplink subframe following sending of the third information; or
a first uplink subframe after end effective time of the first transmit power.

10. The method according to any one of claims 1 to 9, wherein the method further comprises:
sending fourth information, wherein the fourth information indicates whether transmission in a first power mode is supported.

11. The method according to claim 10, wherein the fourth information is carried in at least one of the following information: a buffer status report, hybrid automatic repeat request feedback information, or a random access request.

12. The method according to claim 11, wherein a first scrambling scheme is used for the buffer status report, to indicate whether transmission in the first power mode is supported.

13. The method according to claim 11, wherein a first scrambling scheme is used for the hybrid automatic repeat request feedback information, to indicate whether transmission in the first power mode is supported.

14. The method according to claim 11, wherein the fourth information is a first random access preamble sequence, to indicate whether transmission in the first power mode is supported.

15. The method according to any one of claims 1 to 14, wherein the first power adjustment amount is a positive value or a negative value.

16. The method according to any one of claims 1 to 15, wherein the first information comprises an index corresponding to the first power adjustment amount, or the first information comprises a power level corresponding to the second transmit power.

17. The method according to any one of claims 1 to 16, wherein the first information is any one of the following: a medium access control control element or downlink control information.

18. A communication method, wherein the method comprises:
sending first information, wherein the first information indicates a first power adjustment amount; and
receiving an uplink signal from a terminal device, wherein the uplink signal is sent at a second transmit power, and the second transmit power is obtained based on a first transmit power and the first information.

19. The method according to claim 18, wherein the first transmit power is based on a maximum transmit power configured by a network device, or the first transmit power is a maximum transmit power, a minimum transmit power, or an intermediate value of transmit power of the terminal device, wherein the intermediate value of transmit power is an intermediate value between the maximum transmit power and the minimum transmit power.

20. The method according to claim 18 or 19, wherein the first information further indicates effective duration of the first power adjustment amount.

21. The method according to claim 18 or 19, wherein the first information further indicates an effective period of the first power adjustment amount, and the effective period comprises at least one of the following information: start effective time, effective duration, or end effective time.

22. The method according to claim 18 or 19, wherein the first information comprises effective duration of the first power adjustment amount, or comprises an offset of effective duration of the first power adjustment amount.

23. The method according to any one of claims 18 to 20, wherein the method further comprises:
sending second information, wherein the second information indicates the effective duration of the first power adjustment amount.

24. The method according to claim 23, wherein the second information comprises the effective duration of the first power adjustment amount, or comprises a base value of the effective duration of the first power adjustment amount.

25. The method according to any one of claims 18 to 24, wherein
the first power adjustment amount takes effect after first time following reception of the first information by the terminal device; or
the first power adjustment amount takes effect after second time following sending of third information by the terminal device; or
the first power adjustment amount takes effect when the terminal device sends the third information; or
the first power adjustment amount takes effect when the first transmit power becomes invalid, wherein
the third information indicates whether the first information is successfully received.

26. The method according to any one of claims 18 to 25, wherein the start effective time of the first power adjustment amount is a start moment of a first uplink subframe, and the first uplink subframe is any one of the following:
a first uplink subframe after the first time following reception of the first information by the terminal device; or
a first uplink subframe after the second time following sending of the third information by the terminal device; or
a first uplink subframe following sending of the third information by the terminal device; or
a first uplink subframe after end effective time of the first transmit power.

27. The method according to any one of claims 18 to 26, wherein the method further comprises:
receiving fourth information, wherein the fourth information indicates whether transmission in a first power mode is supported.

28. The method according to claim 27, wherein the fourth information is carried in at least one of the following information: a buffer status report, hybrid automatic repeat request feedback information, or a random access request.

29. The method according to claim 28, wherein a first scrambling scheme is used for the buffer status report, to indicate whether transmission in the first power mode is supported.

30. The method according to claim 28, wherein a first scrambling scheme is used for the hybrid automatic repeat request feedback information, to indicate whether transmission in the first power mode is supported.

31. The method according to claim 28, wherein the fourth information is a first random access preamble sequence, to indicate whether transmission in the first power mode is supported.

32. The method according to any one of claims 18 to 31, wherein the first power adjustment amount is a positive value or a negative value.

33. The method according to any one of claims 18 to 32, wherein the first information comprises an index corresponding to the first power adjustment amount, or the first information comprises a power level corresponding to the second transmit power.

34. The method according to any one of claims 18 to 33, wherein the first information is any one of the following: a medium access control control element or downlink control information.

35. A communication apparatus, comprising a unit configured to implement the method according to any one of claims 1 to 17, or comprising a unit configured to implement the method according to any one of claims 18 to 34.

36. A communication system, comprising a terminal device and a network device, wherein the terminal device is configured to perform the method according to any one of claims 1 to 17, and the network device is configured to perform the method according to any one of claims 18 to 34.

37. A communication apparatus, comprising a memory, a processor, and a computer program that is stored in the memory and that is runnable on the processor, wherein when the processor executes the computer program, the method according to any one of claims 1 to 17 is implemented, or the method according to any one of claims 18 to 34 is implemented.

38. A computer-readable storage medium, wherein the computer-readable storage medium stores a computer program or instructions, and when the computer program or the instructions are executed, the method according to any one of claims 1 to 34 is performed.

39. A computer program product comprising instructions, wherein when the instructions are run on a communication apparatus, the communication apparatus is enabled to perform the method according to any one of claims 1 to 34.

40. A chip, wherein the chip is coupled to a memory, and the chip is configured to perform the method according to any one of claims 1 to 34.
